Europäisches Patentamt

European Patent Office

Office européen des brevets

(11) Publication number : **0 485 113 A2**

(12) **EUROPEAN PATENT APPLICATION**

(21) Application number : **91310070.7**

(22) Date of filing : **31.10.91**

(51) Int. Cl.⁵ : **B60C 25/132**

(30) Priority : **08.11.90 JP 301146/90**

(43) Date of publication of application :
**13.05.92 Bulletin 92/20**

(84) Designated Contracting States :
**DE FR GB IT**

(71) Applicant : **Bridgestone Corporation
10-1, Kyobashi 1-Chome Chuo-Ku
Tokyo 104 (JP)**

(72) Inventor : **Kawabe, Hiroshi
5-5, Ogawahigashi-cho 3-chome
Kodaira City, Tokyo (JP)**
Inventor : **Watanabe, Toshiyuki
4-2-505, Ogawahigashi-cho 3-chome
Kodaira City, Tokyo (JP)**

(74) Representative : **Whalley, Kevin et al
MARKS & CLERK 57/60 Lincoln's Inn Fields
London WC2A 3LS (GB)**

(54) **Wheel cap shaped jig for assembling tire and rim.**

(57)    A wheel cap shaped jig (10) is in the form of a disc and serves for mounting a tire (34) onto a wheel (12) effectively. The wheel includes a rim (14) for mounting and holding the tire and a disc (16) formed with a plurality of bolt-through apertures (20). The jig includes one end face (10b) capable of abutting against an axially outermost end face of a flange (18) of the rim, and a periphery whose outermost diameter ($D_c$) is not less than the outer diameter ($D_r$) of the flange (18) of the rim (14). Diameters of the periphery are progressively reduced as they are remoter from the wheel. The jig is provided with an engaging pin (22) opposing to at least one bolt-through aperture (20) of the disc (16). With the wheel cap shaped jig constructed as above described, bead portions of the tire are brought into close contact with the wheel uniformly without causing any deformation of the bead portions.

FIG. 2

EP 0 485 113 A2

Jouve, 18, rue Saint-Denis, 75001 PARIS

This invention relates to a wheel cap shaped jig for assembling a tire and a rim, which facilitates to mount a tire on the rim without causing undesirable deformation of bead portions of the tire.

In general, a wheel includes a rim for mounting and holding a tire thereon, and a disc secured to a hub of a vehicle by means of bolts threadedly engaged in the hub to form a rotating unit rotating at high speeds while being subjected to various external forces. Therefore, it is very important to fasten the tire to the wheel integrally in order that the tire exhibits its performance. The rim is so designed to ensure the close contact with the tire, while inner diameters of bead portions of the tire are smaller than outer diameters of flanges of the rim.

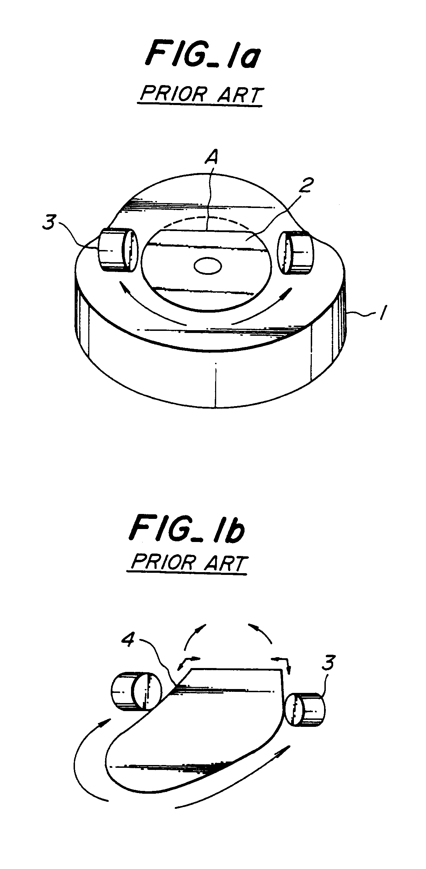

In mounting the tire onto the rim by using an assembling apparatus, on the other hand, the tire 1 is set obliquely relative to the wheel 2 arranged on a rim mounting table (not shown). Thereafter, one of two bead portions diametrically opposed to each other is first fitted on the rim and the other bead portion is progressively fitted on the rim by pressing down a pair of rollers 3 against the tire and rolling them on the tire from the fitting side into circumferential directions as schematically shown by arrows in Fig. 1a. The diametrically opposed tire bead portions or whole the bead portions are ultimately fitted on the rim in this manner.

In mounting the tire onto the rim by the use of this apparatus, however, part of the bead portion not yet completely fitted on the rim is deformed straight relative to the flange of the rim shortly before the termination of the fitting operation as shown by reference A in Fig. 1a.

In this state, the rollers 3 are further rolled so that the bead portion is locally bent or expanded as schematically shown in Fig. 1b and may be damaged as the case may be. Even if the tire bead portion is not damaged, the deformed bead portion detrimentally affects the tire uniformity and sealing performance so that the inherent performance of the tire mounted on the rim could not be exhibited.

It is an object of the invention to provide a wheel cap shaped jig which solves all the problems of the prior art and facilitates mounting of a tire onto a rim without deforming or damaging bead portions of the tire.

In order to accomplish this object, in a wheel cap shaped jig in the form of a disc for mounting a tire onto a wheel having a rim for mounting and holding the tire and a disc formed with a plurality of bolt-through apertures, according to the invention the wheel cap shaped jig comprises one end face capable of abutting against an axially outermost end face of a flange of the rim, and a periphery whose outermost diameter is not smaller than the outer diameter of the flange of the rim, diameters of the periphery being progressively reduced as they are remoter from the wheel, and the wheel cap shaped jig is provided with an engaging pin opposing to at least one bolt-through aperture of the disc.

In assembling a tire and a wheel, the bead portion of the tire is smoothly moved along the outer periphery of the wheel cap shaped jig whose diameters are progressively reduced axially outwardly of the wheel and rides over the rim flange until the bead portion is seated in position on the rim. Therefore, a small force suffices to assemble the tire and the wheel. The bead portion of the tire is not subjected to any local force.

Moreover, the wheel cap shaped jig is coaxially and integrally connected to the wheel with the aid of the engagement of the engaging pin opposed to the wheel and particularly to its disc into a bolt-through aperture of the disc, so that a stable assembling operation can be effected.

The invention will be more fully understood by referring to the following detailed specification and claims taken in connection with the appended drawings.

Figs. 1a and 1b are schematic explanatory views illustrating an operation for directly mounting a tire onto a rim according to the prior art;

Fig. 2 is a sectional view illustrating one half of a wheel cap shaped jig on the left side of its rotating axis according to the invention;

Figs. 3 and 4a and 4b are explanatory views illustrating an operation for mounting a tire onto a rim by the use of the wheel cap shaped jig according to the invention, respectively;

Fig. 5a is a graph illustrating change in distance at circumferential positions from the rim flange to the rim line of a tire mounted on the rim by the use of the wheel cap shaped jig according to the invention; and

Fig. 5b is a graph illustrating change in distance at circumferential positions from the rim flange to the rim line of a tire directly mounted on the rim according to the prior art.

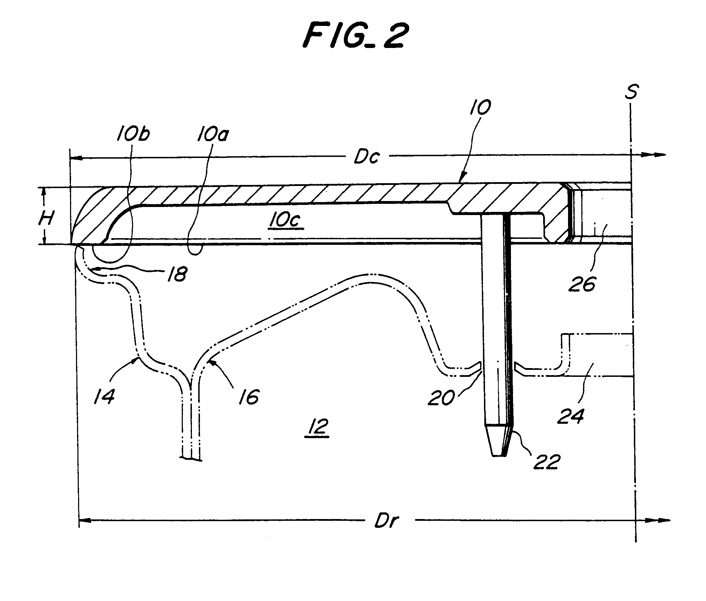

Fig. 2 illustrates a wheel cap shaped jig 10 according to the invention arranged coaxially to a wheel 12, wherein only the half of the wheel cap shaped jig 10 is shown for the sake of clarity because it is substantially in symmetry with respect to its rotating axis S. The wheel 12 includes a rim 14 for holding and fitting thereon bead portions of a tire, and a disc 16 supporting the rim 14.

The wheel cap shaped jig 10 has an end face 10a which is opposed to the wheel 12 substantially in the form of a disc and abuts against a flange 18 of the rim 14 at its axially outermost end face. The outer diameter $D_c$ of the wheel cap shaped jig 10 in the form of a disc on the side facing to the rim 14 is equal to or slightly larger than the maximum outer diameter Dr of the flange 18 of the rim 14. Outer diameters of the wheel cap shaped jig 10 are progressively reduced in a width direction of the rim 14 as they are remoter from the rim 14.

The maximum outer diameter $D_c$ of the wheel cap shaped jig 10 is preferably at the most approximately 2 mm larger than that of the flange 18 of the rim 14. If the maximum outer diameter $D_c$ of the wheel cap shaped jig 10 exceeds the preferable value, the bead portions of a tire are excessively expanded when the tire is being mounted on the rim 14 so that the bead portions are subjected to undesirable deformation. With such large maximum outer diameter $D_c$, moreover, the operation for mounting the tire onto the rim becomes difficult. On the other hand, if the maximum outer diameter $D_c$ of the wheel cap shaped jig 10 is smaller than that of the flange 18 of the rim 14, the tire bead portion of the tire comes directly into contact with the flange 18 of the rim 14, which encounters the problem the same as in the prior art.

The end face 10b of the wheel cap shaped jig 10 is in opposition to the proximity of the axially outermost end face of the flange 18 of the rim 14. In this case, the wheel cap shaped jig 10 needs only to have the end face 10b which is able to abut against at least the axially outermost end face of the flange 18 of the rim 14. The remaining portion of the end face 10b need not engage the flange 18 of the rim 14 and the disc 16.

In order to connect the wheel cap shaped jig 10 to the wheel 12 integrally, moreover, the wheel cap shaped jig 10 is provided with engaging pins 22 corresponding to bolt-through apertures 20 of the disc 16 corresponding to bolts fixed to a hub of a vehicle (not shown). The engaging pins 22 need only to have lengths capable of engaging the bolt-through apertures 20 of the disc 16, when the wheel cap shaped jig 10 abuts against the wheel 12. Therefore, the length of the engaging pins 22 from the end face 10a of the wheel cap shaped jig 10 may be within a range to the width of the rim from one third thereof in order to be applicable to a wheel of so-called reverse type.

Therefore, when the end face 10b of the wheel cap shaped jig 10 is caused to abut against the flange 18 of the rim 14 to insert the engaging pins 22 through the bolt-through apertures 20 of the disc 16, the wheel cap shaped jig 10 and the wheel 12 are integrally connected to each other. The number of the engaging pins 22 may be one which can be increased as the case may be.

On the other hand, the thickness H of the wheel cap shaped jig 10 depends upon the diameter of a rim mating therewith. In general, the thickness H is preferably selected from a range from about 10 mm to 50 mm. For example, with a rim of a 14 inch nominal diameter, the thickness H may be approximately 25 mm. In the case of a constant radius of curvature at the periphery of the wheel cap shaped jig, moreover, the radius of curvature is preferably selected from a range from a value substantially equal to the thickness H to twice the thickness H. In this embodiment, the wheel cap shaped jig 10 is formed with an annular recess 10c to reduce the thickness of the annular portion facing to the wheel 12. However, the wheel cap shaped jig 10 may have a constant thickness.

Moreover, the wheel cap shaped jig 10 is formed substantially at its center with a centering hole 26 in the rotating axial direction and substantially coaxial to a hole 24 formed in the wheel 12 at its center for receiving therein one end of an axle.

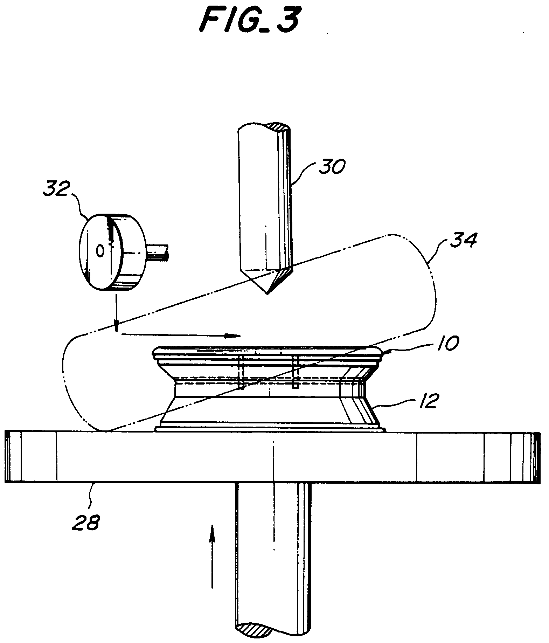

A conical end of the spindle 30 of a tire-rim assembling apparatus abuts against the centering hole 26 of the wheel cap shaped jig 10 when the table 28 of the tire-rim assembling apparatus is raised after the wheel 12 fitted with the wheel cap shaped jig 10 and a tire 34 of one bead portion loosely arranged about the rim are arranged on the table 28 as shown in Fig. 3. By further raising the table 28, the wheel 12 is moved on the table 28 by a cam effect of the engagement of the conical end of the spindle 30 with the centering hole 26 until the wheel 12 is centered at a predetermined position.

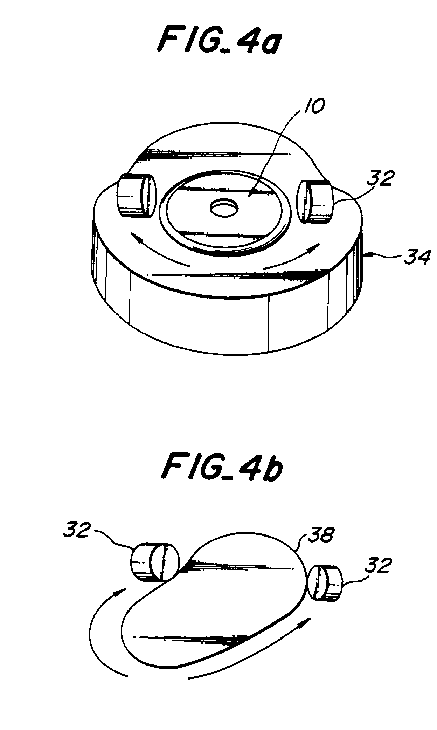

At this time, a pair of rollers 32 are rolled from the side of the tire whose one bead portion is loosely arranged about the rim to the position diametrically opposed thereto along the bead portion. In this case, the wheel has been fitted on its side remote from the table 28 with the wheel cap shaped jig 10 having peripheral diameters progressively reducing as they are remoter from the wheel 12. Therefore, the tire 34 is mounted onto the rim along the periphery of the wheel cap shaped jig with a relatively small urging force as shown in Fig. 4a. Consequently, the bead portion 38 is fitted onto the rim without being bent or deformed even shortly before the termination of the fitting operation as shown in Fig. 4b.

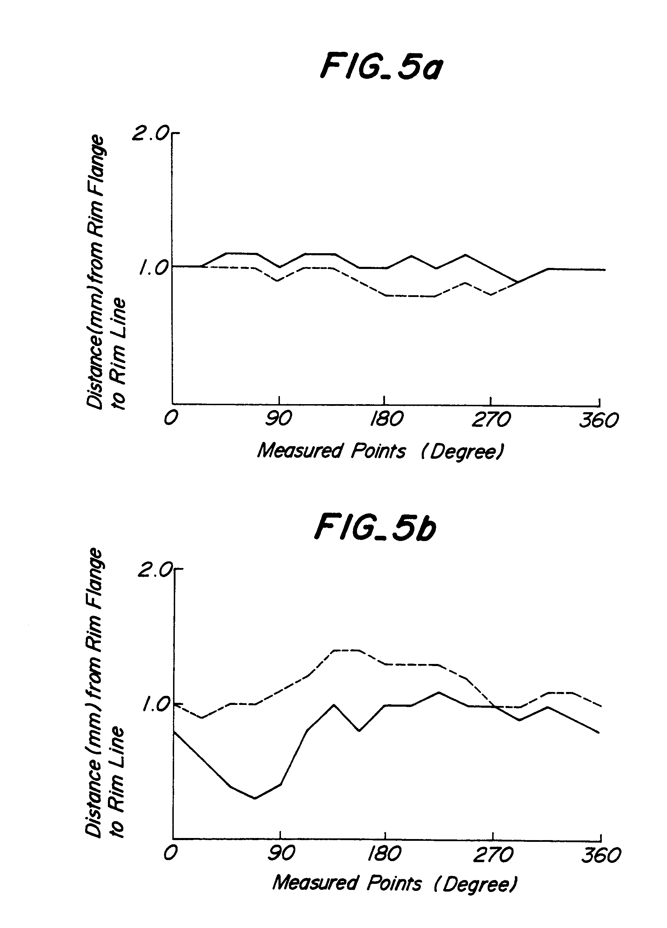

In order to compare tires using the wheel cap shaped jigs according to the invention with tires not using any wheel cap shaped jigs according to the prior art, the following experiment was carried out. Tires of 195/60 R14 were mounted on wheels of 14 inch nominal diameters by the use of wheel cap shaped jigs, each made of a plastic resin and having a 392 mm outer diameter, a 23 mm thickness, and four engaging pins of a 100 mm length according to the invention, and without using such a wheel cap shaped jig according to the prior art. The tires were filled with pressurized air of 2.0 kg/cm². Distances between rim flanges and rim lines of tire side surfaces were measured over the whole circumferences of the tires to compare uniformities of close contact therebetween. Figs. 5a and 5b illustrate results of the experiment. Solid lines denote the results on the rim lines positioned on the outer side of the vehicle, while broken lines illustrates the results on the rim lines located on the inner side of the vehicle in Figs. 5a and 5b.

It is clear from the results shown in Figs. 5a and 5b that the tires mounted on the wheels by the use of the wheel cap shaped jigs according to the invention can bring bead portions of them into close contact with the wheels more uniformly than those of tires directly mounted on the wheels according to the prior art.

As can be seen from the above explanation, the wheel cap shaped jigs according to the invention can bring bead portions of tires into close contact with rims uniformly without causing any deformation of the bead portions. Therefore, it is possible to eliminates various problems such as vibrations, air leakage, irregular wear and the like due to deformations of the bead portions of tires.

While the invention has been particularly shown and described with reference to preferred embodiments thereof, it will be understood by those skilled in the art that the foregoing and other changes in form and details can be made therein without departing from the spirit and scope of the invention.

**Claims**

1. A wheel cap shaped jig (10) in the form of a disc for mounting a tire (34) onto a wheel (12) having a rim (14) for mounting and holding the tire and a disc (16) formed with a plurality of apertures (20), characterized in that the wheel cap shaped jig has an end face (10b) capable of abutting against an axially outermost end face of a flange (18) of the rim, and a periphery whose outermost diameter ($D_c$) is not less than the outer daimeter ($D_r$) of the flange (18) of the rim (14), the diameters of the periphery being progressively reduced as they are remoter from the wheel, and the jig (10) being provided with an engaging pin (22) opposing at least one aperture (20) of the disc (16).

2. A wheel cap shaped jig as claimed in claim 1, characterized in that the length of the engaging pin (22) from an end face (10a) of the jig is within a range to the width of the rim from one third thereof.

3. A wheel cap shaped jig as claimed in claim 1 or 2, characterized in that the thickness of the jig is within a range from 10 mm to 50 mm.

4. A wheel cap shaped jig as claimed in any of claims 1 to 3, characterized in that, when the radius of curvature at the periphery of the jig is constant, the radius of the curvature is within a range from a value substantially equal to the thickness (H) of the jig to twice the thickness (H) of the jig.

5. A wheel cap shaped jig as claimed in any of claims 1 to 4, characterized in that the jig is formed substantially at its center with a centering hole (26) in its rotating axial direction and substantially coaxial to a hole (24) formed in the wheel (12) at its center for receiving therein one end of an axle.

EP 0 485 113 A2

# FIG_1a
## PRIOR ART

# FIG_1b
## PRIOR ART

5

# FIG_2

# FIG_3

## FIG. 4a

## FIG. 4b

## FIG_5a

## FIG_5b